# EUROPEAN PATENT SPECIFICATION

(11) **EP 4 462 569 B1**
(45) Date of publication and mention of the grant of the patent: **03.06.2026**
(21) Application number: 23898212.8
(22) Date of filing: 24.11.2023
(51) Int. Cl.: H01M 50/209, H01M 10/613, H01M 10/6556, H01M 10/647, H01M 10/6554, H01M 50/262, H01M 50/244

(54) **BATTERY PACK**
BATTERIEPACK
BLOC-BATTERIE

(30) Priority: 29.11.2022 KR 20220163109
(43) Date of publication of application: 13.11.2024
(73) Proprietor: LG Energy Solution, Ltd., Seoul 07335 (KR)
(72) Inventor: YOON, Doo Han, Daejeon 34122 (KR)
(74) Representative: Plasseraud IP
(86) International application number: PCT/KR2023/019099
(87) International publication number: WO 2024/117681

(56) References cited:
- CN-B- 112 259 850
- CN-U- 210 467 931
- CN-U- 210 467 931
- CN-U- 216 288 550
- CN-U- 216 288 550
- CN-U- 216 958 298
- CN-U- 216 958 298
- KR-B1- 102 086 127
- KR-B1- 102 086 127
- KR-B1- 102 280 326
- KR-B1- 102 280 326

## Description

### [Technical Field]

The present invention relates to a battery pack which, by improving the mounting structure of a battery block to a battery pack, facilitates the removal of the battery block, eliminates the use of adhesives, prevents damage during removal of the battery block, and facilitates smooth lower part cooling of the battery block.

### [Background]

Unlike primary batteries, secondary batteries are rechargeable and have been heavily researched and developed in recent years due to their potential for miniaturization and large capacity. The demand for secondary batteries as an energy source is increasing rapidly due to the increasing technological development and demand for mobile devices, as well as electric vehicles and energy storage systems that are emerging in response to environmental concerns.

Secondary batteries are categorized into coin-type batteries, cylindrical batteries, prismatic batteries, and pouch-type batteries based on the shape of the battery case. In a secondary battery, an electrode assembly mounted inside the battery case is a chargeable/dischargeable power generator consisting of a laminated structure of electrodes and separators.

Secondary batteries take the form of a battery pack, which can be a grouping of a plurality of battery cells. Battery packs increase energy density and can be mounted in devices that require high energy, such as electric vehicles. Battery packs electrically connect a plurality of battery cells to produce a specified power output, cool the battery cells as their temperature rises during operation, and have various safety devices to respond to emergencies such as ignition.

Increasing the energy density per unit volume is a major challenge for battery packs, which in turn comes down to how efficiently the space inside the battery pack can be utilized. This means mounting more battery cells into the same pack space, and making the structure of the battery pack as simple as possible is a valid option.

In addition, as more battery cells are mounted in the same pack space, a structure that can efficiently transfer the heat generated by the battery cells during the charging and discharging process to the pack case is required, and a multifaceted design plan that considers not only the robust mounting of the battery cells but also the maintenance of the battery pack is required.

Document CN 210467931 U describes a battery module comprising a row of battery cells and side plates and end plates assembled to each other by dovetail connections to hold the battery cells.

Document KR 10 2280326 B1 discloses a battery module comprising stacked battery cells and side plates and end plates assembled to each other to form a module frame.

### [Technical Problem]

The present invention aims to provide a battery pack that can improve space utilization and reduce costs by simplifying the structure of the battery pack, and to provide a battery pack in which the battery cells mounted in the battery pack are firmly mounted while allowing easy removal of the battery cells required for maintenance.

However, the technical problems that the present invention seeks to address are not limited to the problems described above, and other problems not mentioned will be apparent to those of ordinary skill in the art from the description of the invention set forth below.

### [Technical Solution]

To solve this problem, the invention provides a battery pack according to claim 1.

The battery pack according to the invention may present one or more feature(s) of dependent claims 2 to 12, in any combination allowed by the claims.

### [Advantageous Effects]

Note: in the following, "disclosure" is to be read "invention".

The battery pack of the present disclosure with the above configuration has a simple structure in which the end plates, which are coupled via side brackets provided on the side plates, constrain the front, rear and side surfaces of a cell array of a plurality of prismatic cells into a single block. Thus, by simplifying the structure of the battery block, the space utilization rate of the battery pack can be improved and the cost can be reduced.

Furthermore, the battery pack of the present disclosure is fixed directly to the pack case by means of end brackets provided on end plates that constrain the cell array as a block, allowing the battery block to be securely mounted without the use of adhesives, as well as easily removed for maintenance without damage.

### [Brief Description of the Diagrams]

The following diagrams accompanying this specification illustrate preferred embodiments of the present disclosure and, together with the detailed description of the present disclosure that follows, serve to further illustrate the technical ideas of the present disclosure, and the present disclosure is limited by the scope of the claims.
FIG. 1 is a diagram illustrating a battery block according to an exemplary embodiment of the present disclosure.
FIG. 2 is an exploded perspective view of the battery block of FIG. 1.
FIG. 3 is a diagram illustrating a side plate.
FIG. 4 is a cross-sectional view of the incision along the "A-A" line in FIG. 3.
FIG. 5 is an enlarged view of the coupling structure between the side plate and end plate.
FIGS. 6 and 7 are diagrams illustrating a structure where the battery block extends in the width direction.
FIGS. 8 and 9 are diagrams exemplarily illustrating a structure for fixing a battery block of the present disclosure to a pack case.
FIG. 10 is a diagram illustrating a structure where the upper flange of the side plate fixes the cell array.
FIG. 11 is a diagram illustrating the heat transfer structure between the battery block and the base plate.

### [Best Mode]

The present disclosure is subject to various modifications and can have many embodiments, certain of which are described in detail below.

However, this is not intended to limit the present disclosure to any particular embodiment and is to be understood to include all modifications, equivalents, or substitutions that fall within the scope of the thought and technology of the present disclosure.

The terms "comprise" or "have" are used herein to designate the presence of characteristics, numbers, steps, actions, components or members described in the specification or a combination thereof, and it should be understood that the possibility of the presence or addition of one or more other characteristics, numbers, steps, actions, components, members or a combination thereof is not excluded in advance.

In addition, when a part of a layer, a film, a region or a plate is disposed "on" another part, this includes not only a case in which one part is disposed "directly on" another part, but a case in which a third part is interposed there between. In contrast, when a part of a layer, a film, a region or a plate is disposed "under" another part, this includes not only a case in which one part is disposed "directly under" another part, but a case in which a third part is interposed there between. In addition, in this application, "on" may include not only a case of disposed on an upper part but also a case of disposed on a lower part.

The present disclosure relates to a battery pack, which in one example includes battery block including a cell array including a plurality of prismatic cells arranged in a row, a pair of side plates disposed on each of both sides of the cell array, and a pair of end plates disposed on each of front and rear surfaces of the cell array, wherein both ends of the end plates in the width direction are fixed to side brackets provided at both ends of the side plates in the longitudinal direction of the side plates, so that the cell array is constrained as a single block, and a pack case in which a plurality of the battery blocks are mounted.

And, the end plate includes an end bracket that is fixed to a mounting part provided on the pack case.

The battery pack of the present disclosure with such a configuration has a simple structure in which the end plates, which are coupled via side brackets provided on the side plates, constrain the front, rear, and side surfaces of a cell array of a plurality of prismatic cells into a single block. Thus, by simplifying the structure of the battery block, the space utilization rate of the battery pack can be improved and the cost can be reduced.

Furthermore, the battery pack of the present disclosure is fixed directly to the pack case by means of end brackets provided on end plates that constrain the cell array as a block, allowing the battery block to be securely mounted without the use of adhesives, as well as easily removed for maintenance without damage.

### [Mode for Disclosure]

Specific embodiments of the present disclosure will now be described in detail with reference to the accompanying drawings. As used in the following description, relative positioning designations such as front to back, up and down, left and right are intended to aid in understanding the disclosure and refer to the orientation shown in the drawings unless otherwise defined.

### [First embodiment]

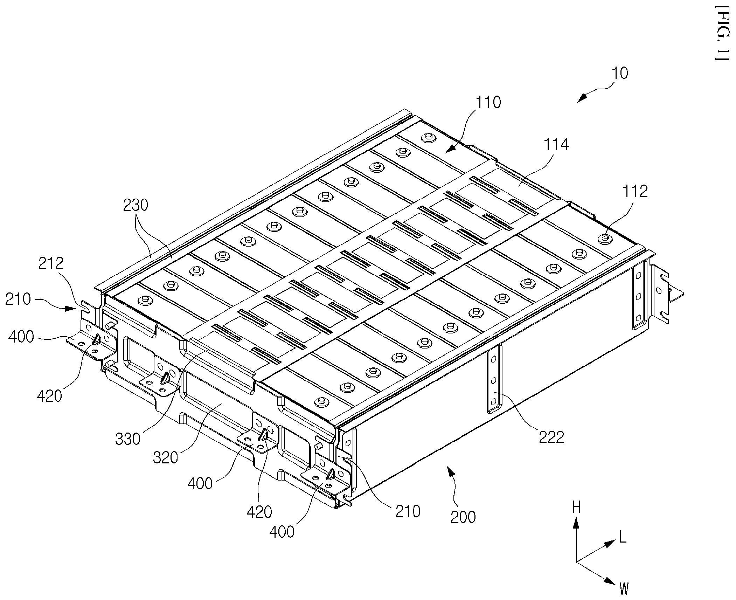

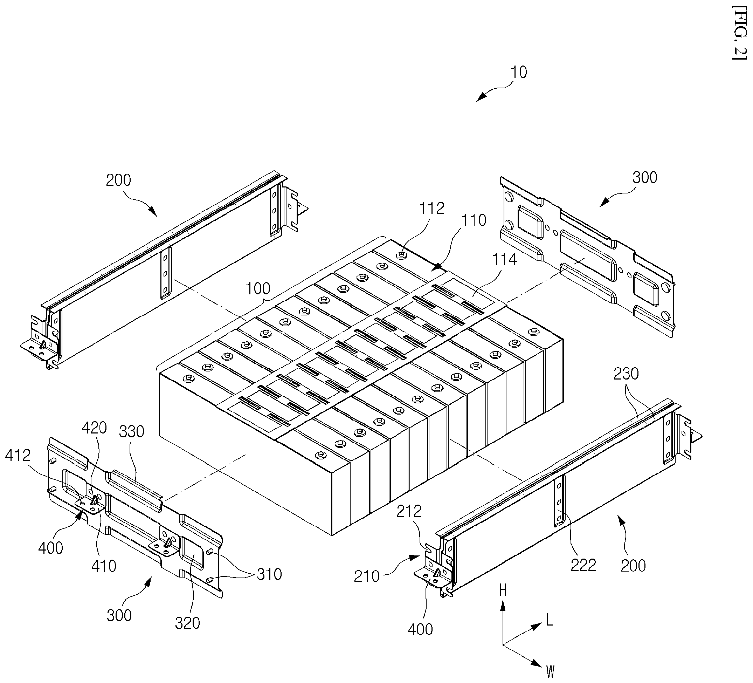

FIG. 1 is a drawing illustrating a battery block 10 according to an exemplary embodiment of the present disclosure, and FIG. 2 is an exploded perspective view of the battery block 10 of FIG. 1. The following will first describe the configuration of the battery block 10 as it is mounted in the battery pack 600 of the present disclosure. The description of the configuration of the battery block 10 is useful in understanding its mounting structure to the pack case 602.

Referring to the attached FIGS. 1 and 2, a battery block 10 according to the present disclosure includes a pair of side plates 200 and a pair of end plates 300 that are coupled thereto to form a parallelepiped-shaped space, and a cell array 100 housed in the parallelepiped space.

The cell array 100 refers to a population of cells comprising a plurality of prismatic cells 110 arranged in a row. Each prismatic cell 110 is a finished prismatic secondary battery capable of being independently charged and discharged, and in the embodiment shown, 12 prismatic cells 110 are shown together to form a single cell array 100. All of the prismatic cells 110 are typically constructed to the same specifications, and the prismatic cells 110 aligned in a row collectively form a parallelepiped shape.

For reference, the illustrated prismatic cell 110 corresponds to a unidirectional prismatic cell 110 having both positive and negative electrode terminals 112 disposed on its upper surface, and also having a venting device 114 between the pair of electrode terminals 112. The venting device 114 is a safety valve that ruptures to relieve pressure inside the prismatic cell 110 when an exceed level of pressure is applied, and may include, for example, a notched rupture disk made of a thin plate-like member of a metal material. When the pressure inside the sealed prismatic cell 110 rises, the pressure causes tensile strain across the thin plate and tears the weaker notch part to release the pressure inside the prismatic cell 110.

Further, the electrode terminals 112 of the prismatic cells 110 on the cell array 100 may be arranged to have the same polarity back-to-back in a row or alternating opposite polarities to facilitate electrical connections in parallel or series. In other words, alignment of the plurality of prismatic cells 110 in a row does not necessarily imply alignment of the polarity of the electrode terminals 112 in a row.

A pair of side plates 200 are disposed on each of both sides of the cell array 100, and a pair of end plates 300 are disposed on each of the front and rear surfaces of the cell array 100. Both ends in the width direction W of the end plates 300 are fixed to the side brackets 210 provided at both ends in the longitudinal direction L of the side plates 200, and the interconnection of the end plates 300 and the side plates 200 constrains the cell array 100 into a block.

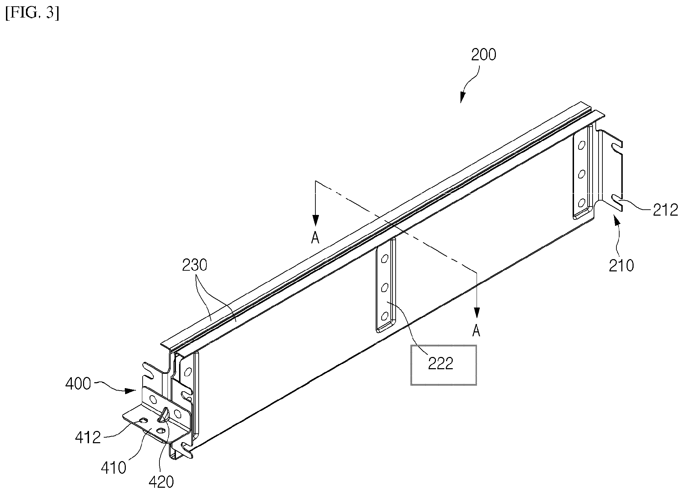

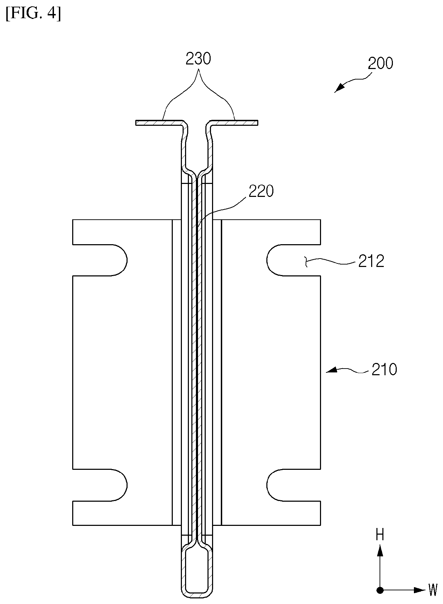

FIG. 3 is a drawing illustrating a side plate 200, and FIG. 4 is a cross-sectional view through an incision along line "A-A" in FIG. 3. The illustrated side plate 200 includes a single plate bent into a "∪" shape with an open upper end to form a space within. By bending a single plate into a "∪" shape with an open upper end, the side plate 200 is lightweight and exhibits good mechanical strength.

Furthermore, as shown in FIGS. 3 and 4, the side plate 200 includes a concave surface 222 on either side of the bent plate, wherein the facing concave surfaces 222 are bonded to each other to form bonding ribs 220. These bonding ribs 220 are provided at least one along the longitudinal direction L of the side plate 200, and in the embodiment shown, a total of three bonding ribs 220 are formed at each end and in the center of the side plate 200.

A single plate bent in a "∪" shape may have excellent durability and strength against compression and tension in the longitudinal direction L due to the bending structure, but may be relatively weak against forces in the height direction H. The bonding ribs 220 improve the stiffness to the force in the height direction H by bonding the structure of the concave surface 222 and the concave surface 222 on both sides of the side plate 200 together by welding, riveting, or the like.

By such a structure of the side plate 200, namely, a single plate structure bent in the form of an "∪" and a structure of concave surfaces 222 bonded to each other, the side plate 200 is lightweight and has strong mechanical rigidity. Accordingly, in the battery block 10 of the present disclosure, the side plate 200 replaces the configuration of the cross beam conventionally provided in the battery pack, and the simplified structure of the battery pack 600 improves the space utilization rate of the battery pack 600, further increasing the energy density in the same volume, and reducing the cost.

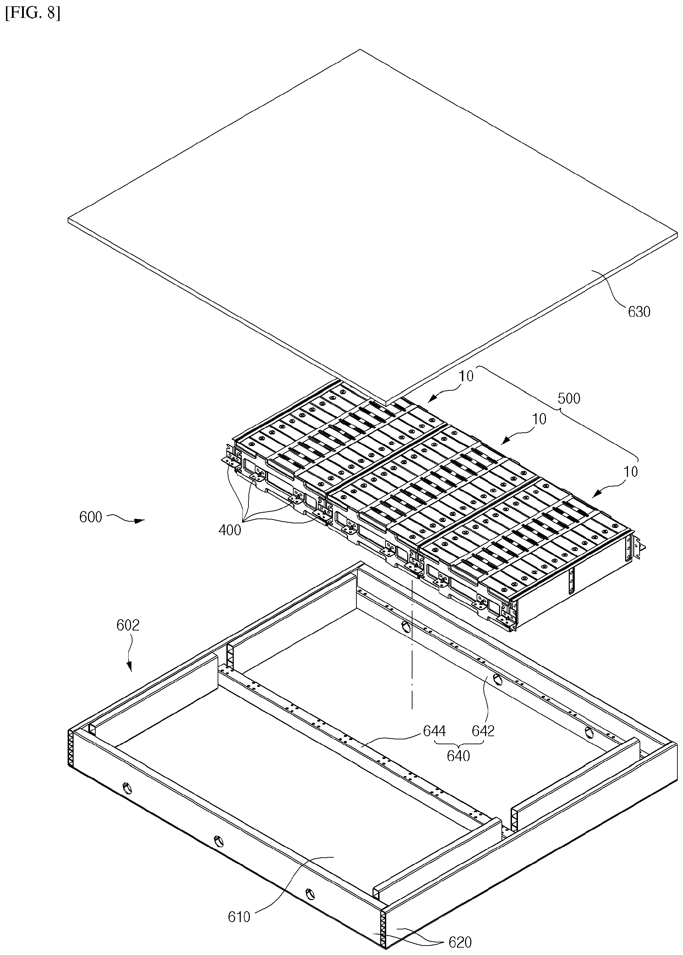

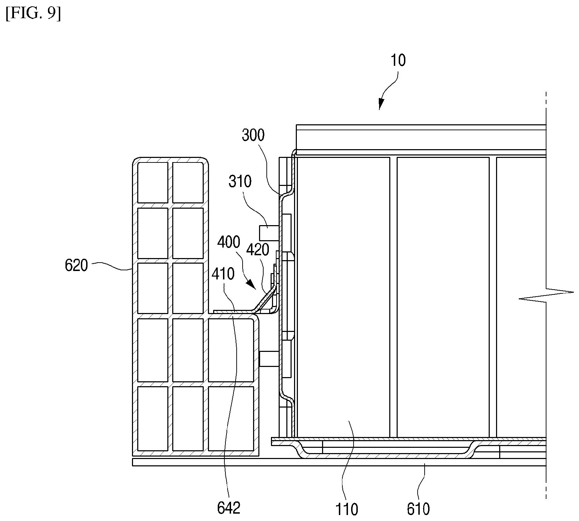

Further, the upper end of the side plate 200 is formed with a bent upper flange 230 that contacts the upper surface of the cell array 100. The upper flange 230 creates a downward fixing force that presses the cell array 100 to the bottom when the battery block 10 is mounted in the pack case 602. The structure by which the battery block 10 of the present disclosure is mounted to the pack case 602 will be described in more detail later with reference to FIGS. 8 and 9.

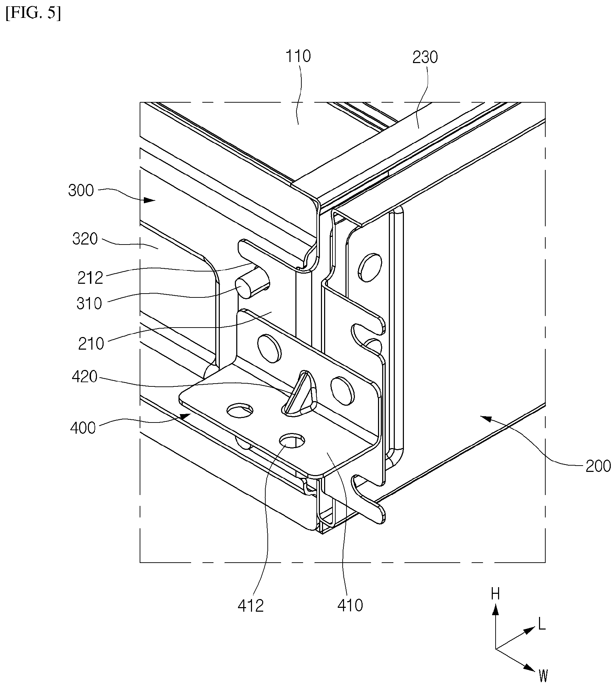

FIG. 5 is an enlarged view of a coupling structure between the side plate 200 and the end plate 300. A side bracket 210 provided on the side plate 200 has a fastening groove 212 that is inserted into a weld bolt 310 protruding from the end plate 300, and the weld bolt 310 and the fastening groove 212 are mutually bonded by welding.

Weld bolts 310 provided on a pair of end plates 300 disposed on the front and rear surfaces of the cell array 100, respectively, provide a fastening point for the side brackets 210, and fastening grooves 212 are engaged in the weld bolts 310 to primarily align the side plate 200 and the assembly position of the end plate 300. For a stable and robust coupling of the side plate 200 and the end plate 300, and for strong constraint to the cell array 100, the weld bolts 310 and the fastening grooves 212 may be provided in an up-down pair relative to the center in the height direction H of the cell array 100.

Then, referring to FIGS. 1 through 3 and FIG. 5, the end plate 300 includes an end bracket 400 that is fixed to the pack case 602. Additionally, the side brackets 210 also include end brackets 400 that are fixed to the pack case 602.

An end bracket 400 provided on the end plate 300 and the side plate 200 has a fastening surface 410 parallel to the width direction W, and one or more fastening holes 412 are formed on the fastening surface 410 of the end bracket 400. The fastening surface 410 of the end bracket 400 is seated on a mounting part 640 provided in the pack case 602 (see FIG. 9), and the battery block 10 is fixed to the pack case 602 by bonding or uniting the end bracket 400 to the mounting part 640 of the pack case 602 via the fastening holes 412.

Further, the end bracket 400 may include reinforcing ribs 420, such as in the form of a right triangle perpendicular to the fastening surface 410, to provide additional rigidity against load in the height direction H. Of note, to reinforce the rigidity of the end plate 300 itself, one or more concave surfaces 320, similar to the concave surfaces 222 of the side plate 200, may be bent and formed, and the upper end of the end plate 300 may also be provided with an upper flange 330 for stable fixation of the cell array 100.

### [Second embodiment]

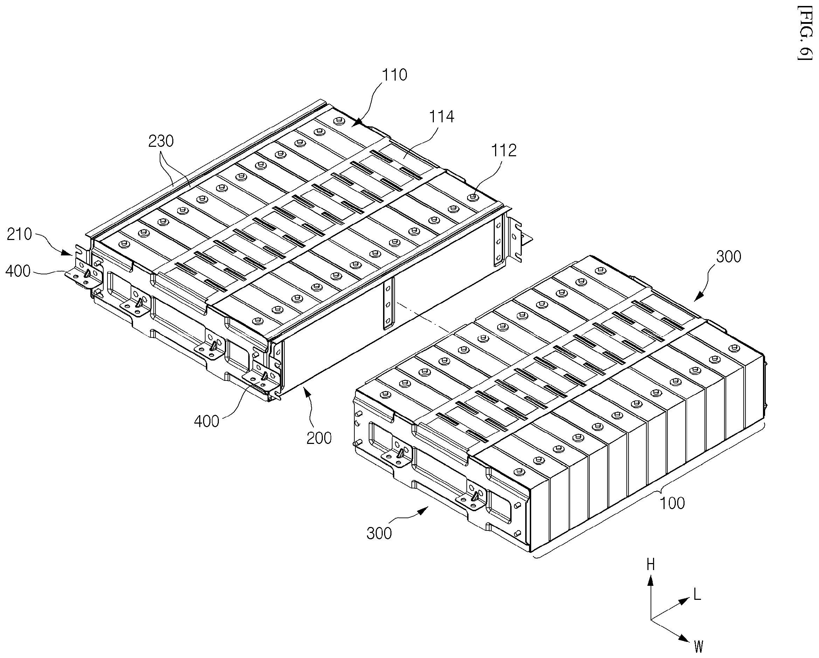

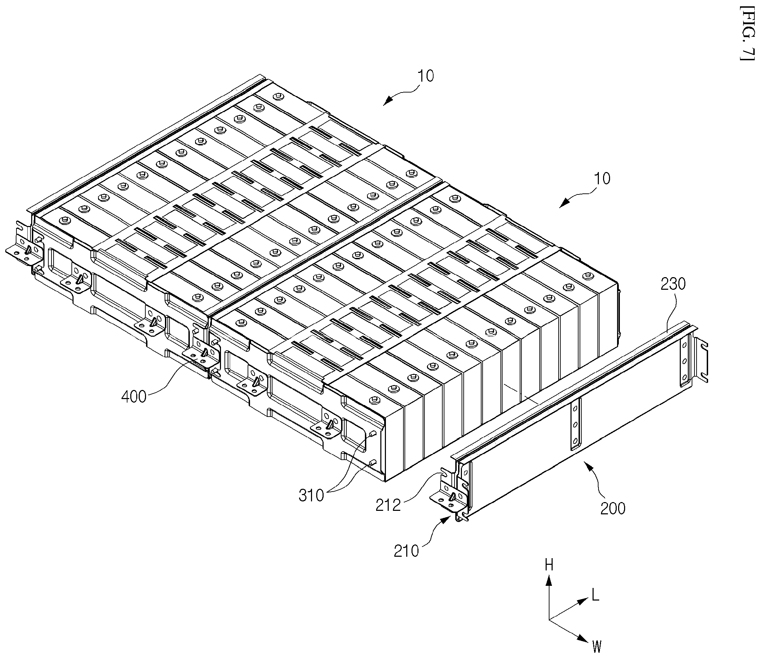

FIGS. 6 and 7 are drawings illustrating a structure in which the battery block 10 of FIG. 1 extends in the width direction W.

The battery block 10 of the present disclosure is expandable to any number of cell arrays 100 along the width direction W via the side plates 200 and side brackets 210. A second embodiment of the present disclosure describes one such expansion of the battery block 10.

Referring to FIG. 6, the side bracket 210 is provided with fastening grooves 212, respectively, on both the left and right sides relative to the center of the width direction W of the side plate 200. Thus, for one side plate 200, it is possible to connect one end plate 300 to both sides in the width direction W thereof.

As shown in FIG. 7, another cell array 100 arranged along the width direction W share a single side plate 200 in the center, and a plurality of cell arrays 100 may extend along the width direction W by means of weld bolts 310 provided in a pair of end plates 300 disposed at the front and rear surfaces of another cell array 100, respectively, being fixed to the fastening groove212 of the side bracket 210.

In this way, as the side brackets 210 are provided with fastening grooves 212 on both the left and right sides, respectively, it becomes possible to couple one end plate 300 with each side of one side plate 200, and as neighboring cell arrays 100 share one side plate 200, the total number of side plates 200 is only one more than the number of cell arrays 100 in a structure in which a plurality of battery blocks 10 are connected. Thus, the space efficiency of the battery pack 600 mounting the battery block 10 of the present disclosure is further improved.

### [Third embodiment]

In a third embodiment of the present disclosure, a structure is described in which the battery block 10 extending in the width direction W described above is mounted to the pack case 602. FIGS. 8 and 9 are drawings illustrating a structure in which the battery block 10 is fixed to the pack case 602.

The pack case 602 in which the plurality of battery blocks 10 are mounted includes a base plate 610 forming a bottom surface, side frames 620 forming walls along all sides of the base plate 610, and an upper cover 630 sealing the upper surface of the pack case 602. The pack case 602 shown illustrates an example of two battery modules 500 with side plates 200 and end plates 300 coupled together in a grid configuration to form a row of three cell arrays 100 (an assembly of a plurality of battery blocks connected together via side plates according to a second embodiment will be referred to herein as a battery module). For reference, one battery module 500 is omitted from FIG. 8 so that the structure of the pack case 602 can be clearly shown.

One battery module 500 with three cell arrays 100 in a row has end brackets 400 exposed along the end plates 300 of the front and rear surfaces, and one end bracket 400 is also exposed on the side brackets 210 between the end plates 300.

Referring to the cross-sectional view of FIG. 9, the pack case 602 is provided with a rail-shaped mounting part 640 corresponding to the fastening surfaces 410 of the end brackets 400 that protrude to the front and rear of the battery module 500. The mounting part 640 includes a pair of side mounting parts 642 coupled to or integrally formed with the side frame 620, and a center mounting part 644 arranged across the center of the base plate 610.

When the battery module 500 is inserted into the space between the side mounting part 642 and the center mounting part 644, the fastening surface 410 of the end bracket 400 faces the mounting part 640 of the pack case 602, and all of the battery blocks 10 are fixed collectively to the pack case 602 by binding or uniting the end bracket 400 to the mounting part 640 of the pack case 602 via the fastening holes 412.

Here, when the end brackets 400 of each battery block 10 are coupled and fixed to the mounting part 640 of the pack case 602, the side plates 200, and furthermore the upper flanges 230, 330, which are bend-formed at the upper end of the end plates 300, naturally generate a downward fixing force that presses the cell array 100 against the base plate 610, thereby ensuring that the cell array 100 is firmly pressed against the base plate 610.

The close adhesion between the cell array 100 and the base plate 610 plays an important role in facilitating the transfer of heat generated by the cell array 100 to the base plate 610. Therefore, it would be advantageous for the upper flanges 230, 330 to generate sufficient downward fixing force if the tolerances are managed in such a way that there is a small amount of clearance between the fastening surface 410 of the end bracket 400 and the mounting part 640 when the battery block 10 or battery module 500 is placed in the pack case 602.

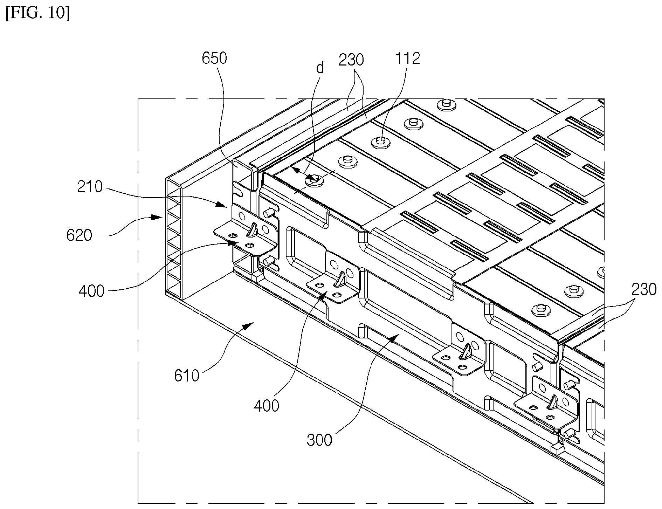

FIG. 10 is a diagram illustrating a structure in which the upper flange 230 of the side plate 200 fixes the cell array 100. As described above, the upper flange 230 of the side plate 200 contacts the upper surface of an adjacent cell array 100 that shares the side plate 200, creating a downward fixing force that presses the cell array 100 against the base plate 610 when the battery block 10 is mounted to the pack case 602 via the end brackets 400. However, since the upper flange 230 at each end in the width direction of the pack case 602 does not have a corresponding cell array 100, it may be desirable to form a flange mounting part 650 on a side frame 620 and allow the hollow upper flange 230 to be supported on the flange mounting part 650 to provide a stable mounting while also ensuring that a uniform pressing force is applied to the corners of the cell array 100.

And, referring to FIG. 10, the edges of the upper flange 230 that contact the upper surface of the cell array 100 are spaced apart by a distance d, such as a distance in the range of 5 to 10mm, with respect to the electrode terminals 112 of the prismatic cells 110. While a larger width of the upper flange 230 would be preferable to ensure that the downward fixing force of the upper flange 230 acts on the cell array 100 as uniformly as possible, the edges of the upper flange 230 are spaced apart from the electrode terminals 112 for convenience of electrical connection to the prismatic cell 110 and in consideration of the risk of shorting.

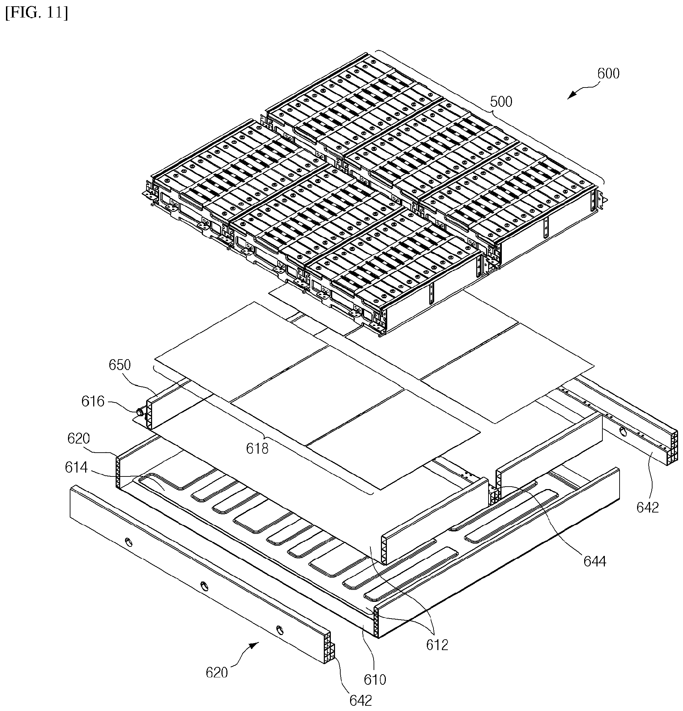

FIG. 11 is a diagram illustrating a heat transfer structure between the battery block 10 and the base plate 610. The battery pack 600 of the present disclosure has a very good adhesion of the battery block 10 to the base plate 610 due to the configuration of the end bracket 400 and the upper flange 230. Therefore, the battery pack 600 of the present disclosure does not require the use of adhesives for the lower part fixation of the battery block 10, and as the adhesives are not used, the lower part cooling, that is, heat transfer, of the battery block 10 is facilitated. Furthermore, since no adhesive is used, the mounting process of the battery block 10 is simplified and damage is prevented when the battery block 10 is removed.

In the embodiment shown, the base plate 610 includes a heat sink 612 having a cooling flow path 614 through which cooling medium flows therein. The heat sink 612 includes a bottom plate with the cooling flow path 614 formed therein and an upper plate that fluidly seals by binding to the bottom plate, wherein the upper plate is provided with a pair of flow adapters 616 that form inlets and outlets for cooling medium to be distributed to the cooling flow path 614 (only one flow adapter is shown in FIG. 11 due to illustrated orientation).

Further, between the heat sink 612 of the base plate 610 and the contact surface of the battery block 10, a thermally conductive thermal interface material (TIM) 618 may be interposed. The thermally conductive thermal interface material 618 refers to an air-permeable material that has a significantly higher thermal conductivity than metallic materials such as aluminum, and the thermally conductive thermal interface material 618 contributes to rapidly transferring heat generated by the battery block 10 to the heat sink 612 with a high thermal conductivity and by acting as a filler to smooth out microscopic irregularities in the contact surface. This function of the thermally conductive thermal interface material 618 is assured by the close adhesion between the base plate 610 and the battery block 10 by the end bracket 400 and the upper flange 230.

### [Reference numerals]

10: BATTERY BLOCK
100: CELL ARRAY
110: PRISMATIC CELL
112: ELECTRODE TERMINAL
114: VENTING DEVICE
200: SIDE PLATE
210: SIDE BRACKET
212: FASTENING GROOVE
220: BONDING RIB
222: CONCAVE SURFACE
230: UPPER FLANGE
300: END PLATE
310: WELD BOLT
320: CONCAVE SURFACE
330: UPPER FLANGE
400: END BRACKET
410: FASTENING SURFACE
412: FASTENING HOLE
420: REINFORCING RIB
500: BATTERY MODULE
600: BATTERY PACK
602: PACK CASE
610: BASE PLATE
612: HEAT SINK
614: COOLING FLOW PATH
616: FLOW ADAPTER
618: THERMALLY CONDUCTIVE THERMAL INTERFACE MATERIAL
620: SIDE FRAME
630: UPPER COVER
640: MOUNTING PART
642: SIDE MOUNTING PART
644: CENTER MOUNTING PART
650: FLANGE MOUNTING PART
W: WIDTH DIRECTION
L: LONGITUDINAL DIRECTION
H: HEIGHT DIRECTION

## Claims

1. A battery pack (600), comprising:
a battery block (10) comprising a cell array (100) including a plurality of prismatic cells (110) arranged in a row, a pair of side plates (200) disposed on both sides of the cell array (100), and a pair of end plates (300) disposed on each of front and rear surfaces of the cell array (100), wherein both ends of the end plates (300) in the width direction are fixed to side brackets (210) provided at both ends of the side plates (200) in the longitudinal direction of the side plates (200), so that the cell array (100) is constrained as a single block; and
a pack case (602) in which a plurality of the battery blocks (10) is mounted,
**characterized in that** the end plate (300) comprises an end bracket (400) that is fixed to a mounting part (640) provided in the pack case (602),
wherein the side bracket (210) comprises an end bracket (400) that is fixed to a mounting part (640) provided in the pack case (602)
wherein the side plate (200) is a single plate bent into a "∪" shape with an open upper end to form a space inside.

2. The battery pack (600) of claim 1, wherein
the end bracket (400) is provided with a fastening surface (410) parallel to a width direction, the fastening surface (410) having at least one fastening hole (412) formed therein, and being fixed to the mounting part (640) through the fastening hole (412).

3. The battery pack (600) of claim 2, wherein
the end bracket (400) is provided with a reinforcing rib (420) perpendicular to the fastening surface (410).

4. The battery pack (600) of claim 1, wherein
the side plate (200) is provided with a concave surface (222) on either side of the bent plate, the concave surfaces (222) facing each other having at least one bonding rib (220) bonded to each other along the longitudinal direction thereof.

5. The battery pack (600) of claim 1, wherein
the upper end of the side plate (200) is formed with a bent upper flange (230) that contacts an upper surface of the cell array (100).

6. The battery pack (600) of claim 5, wherein
the upper flange (230) exerts a downward fixing force to press the cell array (100) against a base plate (610) of the pack case (602) as the end bracket (400) is fixed to the mounting part (640).

7. The battery pack (600) of claim 6, wherein
the edges of the upper flange (230) contacting the upper surface of the cell array (100) are spaced apart from the electrode terminals (112) of the prismatic cells (110) by a distance ranging from about 5 to about 10 mm.

8. The battery pack (600) of claim 6, wherein
the pack case (602) comprises:
a base plate (610) forming a bottom surface, a side frame (620) forming walls along all sides of the base plate (610), and an upper cover (630) sealing an upper surface of the pack case (620), wherein
the inside of the base plate (610) is provided with a cooling flow path (614) through which a cooling medium is arranged to flow.

9. The battery pack (600) of claim 8, wherein
between the base plate (610) and a contact surface of the battery block, a thermally conductive thermal interface material (TIM) (618) is interposed.

10. The battery pack (600) of claim 1, wherein
the side bracket (210) is provided with a fastening groove (212) inserted into a weld bolt (310) protruding from the end plate (300), wherein
the weld bolt (310) and fastening groove (212) are bonded to each other by welding.

11. The battery pack (600) of claim 10, wherein
the side brackets (210) are provided with the fastening grooves (212), respectively, on both left and right sides relative to a center in the width direction of the side plate (200).

12. The battery pack (600) of claim 11, wherein
another array of cells arranged along the width direction share the side plate (200), and
the plurality of cell arrays (100) extends along a width direction utilizing weld bolts (310) provided in a pair of end plates (300) disposed on a front and rear surface of the another cell array (110), respectively, being fixed to the fastening grooves (212) of the side bracket (210).

## Patentansprüche

1. Batteriepack (600), umfassend:
einen Batterieblock (10), umfassend eine Zellanordnung (100), welche eine Mehrzahl prismatischer Zellen (110) umfasst, welche in einer Reihe angeordnet sind, ein Paar Seitenplatten (200), welche an beiden Seiten der Zellanordnung (100) angeordnet sind, und ein Paar Endplatten (300), welche an jeder von vorderen und hinteren Flächen der Zellanordnung (100) angeordnet sind, wobei beide Enden der Endplatten (300) in der Breitenrichtung an Seitenhalterungen (210) fixiert sind, welche an beiden Enden der Seitenplatten (200) in der longitudinalen Richtung der Seitenplatten (200) bereitgestellt sind, sodass die Zellanordnung (100) als ein einzelner Block eingeschränkt ist; und
ein Packgehäuse (602), in welchem eine Mehrzahl der Batterieblöcke (10) montiert ist,
**dadurch gekennzeichnet, dass** die Endplatte (300) eine Endhalterung (400) umfasst, welche an einem Montageteil (640) fixiert ist, welches in dem Packgehäuse (602) bereitgestellt ist,
wobei die Seitenhalterung (210) eine Endhalterung (400) umfasst, welche an dem Montageteil (640) fixiert ist, welcher in dem Packgehäuse (602) bereitgestellt ist,
wobei die Seitenplatte (200) eine einzelne Platte ist, welche in eine "U"-Form mit einem offenen oberen Ende gebogen ist, um innen einen Raum zu bilden.

2. Batteriepack (600) nach Anspruch 1, wobei
die Endhalterung (400) mit einer Befestigungsfläche (410) bereitgestellt ist, welche parallel zu einer Breitenrichtung ist, wobei die Befestigungsfläche (410) wenigstens ein Befestigungsloch (412) aufweist, welches darin gebildet ist, und an dem Montageteil (640) durch das Befestigungsloch (412) fixiert ist.

3. Batteriepack (600) nach Anspruch 2, wobei
die Endhalterung (400) mit einer Verstärkungsrippe (420) bereitgestellt ist, welche senkrecht zu der Befestigungsfläche (410) ist.

4. Batteriepack (600) nach Anspruch 1, wobei
die Seitenplatte (200) mit einer konkaven Fläche (222) an jeder Seite der gebogenen Platte bereitgestellt ist, wobei die konkaven Flächen (222), welche einander zugewandt sind, wenigstens eine Verbindungsrippe (220) aufweisen, welche entlang der longitudinalen Richtung davon miteinander verbunden sind.

5. Batteriepack (600) nach Anspruch 1, wobei
das obere Ende der Seitenplatte (200) mit einem gebogenen oberen Flansch (230) gebildet ist, welcher eine obere Fläche der Zellanordnung (100) kontaktiert.

6. Batteriepack (600) nach Anspruch 5, wobei
der obere Flansch (230) eine nach unten gerichtete Fixierkraft ausübt, um die Zellanordnung (100) gegen eine Bodenplatte (610) des Packgehäuses (602) zu drücken, während die Endhalterung (400) an dem Montageteil (640) fixiert ist.

7. Batteriepack (600) nach Anspruch 6, wobei
die Ränder des oberen Flansches (230), welche die obere Fläche der Zellanordnung (100) kontaktieren, von den Elektrodenanschlüssen (112) der prismatischen Zellen (110) um einen Abstand, welcher von etwa 5 bis etwa 10 mm reicht, beabstandet sind.

8. Batteriepack (600) nach Anspruch 6, wobei
das Packgehäuse (602) umfasst:
eine Basisplatte (610), welche eine Bodenfläche bildet, einen Seitenrahmen (620), welcher Wände entlang aller Seiten der Basisplatte (610) bildet, und eine obere Abdeckung (630), welche eine obere Fläche des Packgehäuses (620) abdichtet, wobei
die Innenseite der Basisplatte (610) mit einem Kühlströmungskanal (614) bereitgestellt ist, durch welchen ein Kühlmedium zum Strömen angeordnet ist.

9. Batteriepack (600) nach Anspruch 8, wobei
zwischen der Basisplatte (610) und einer Kontaktfläche des Batterieblocks, ein wärmeleitendes thermisches Schnittstellenmaterial (TIM) (618) eingefügt ist.

10. Batteriepack (600) nach Anspruch 1, wobei
die Seitenhalterung (210) mit einer Befestigungsnut (212) bereitgestellt ist, welche in einen Schweißbolzen (310) eingesetzt ist, welcher von der Endplatte (300) vorsteht, wobei
der Schweißbolzen (310) und die Befestigungsnut (212) durch Schweißen miteinander verbunden sind.

11. Batteriepack (600) nach Anspruch 10, wobei
die Seitenhalterungen (210) jeweils mit den Befestigungsnuten (212) an beiden linken und rechten Seiten relativ zu einer Mitte in der Breitenrichtung der Seitenplatte (200) bereitgestellt sind.

12. Batteriepack (600) nach Anspruch 11, wobei
weitere Zellanordnungen, welche entlang der Breitenrichtung angeordnet sind, die Seitenplatte (200) teilen, und
sich die Mehrzahl von Zellanordnungen (100) entlang einer Breitenrichtung erstreckt unter Verwendung von Schweißbolzen (310), welche in einem Paar Endplatten (300) bereitgestellt sind, welche jeweils an einer vorderen und hinteren Fläche der weiteren Zellanordnung (110) angeordnet sind, wobei sie an den Befestigungsnuten (212) der Seitenhalterung (210) fixiert sind.

## Revendications

1. Bloc-batterie (600) comprenant :
un ensemble batterie (10) comportant un réseau de cellules (100) comprenant une pluralité de cellules prismatiques (110) agencées en rangée, une paire de plaques latérales (200) disposées sur deux côtés du réseau de cellules (100), et une paire de plaques d'extrémité (300) disposées sur chacune des surfaces avant et arrière du réseau de cellules (100), dans lequel les deux extrémités des plaques d'extrémité (300) dans la direction de largeur sont fixées à des supports latéraux (210) disposés aux deux extrémités des plaques latérales (200) dans la direction longitudinale des plaques latérales (200), de sorte que le réseau de cellules (100) soit contraint comme un seul bloc ; et
un boîtier de bloc-batterie (602) dans lequel est montée une pluralité d'ensembles batterie (10),
**caractérisé en ce que** la plaque d'extrémité (300) comprend un support d'extrémité (400) qui est fixé à une pièce de montage (640) prévue dans le boîtier de bloc-batterie (602),
dans lequel le support latéral (210) comprend un support d'extrémité (400) qui est fixé à une pièce de montage (640) prévue dans le boîtier de bloc-batterie (602)
dans lequel la plaque latérale (200) est une plaque simple courbée en forme de « U » avec une extrémité supérieure ouverte pour former un espace à l'intérieur.

2. Bloc-batterie (600) selon la revendication 1, dans lequel
le support d'extrémité (400) est pourvu d'une surface de fixation (410) parallèle à une direction de largeur, la surface de fixation (410) ayant au moins un trou de fixation (412) formé à l'intérieur, et étant fixée à la pièce de fixation (640) à travers le trou de fixation (412).

3. Bloc-batterie (600) selon la revendication 2, dans lequel
le support d'extrémité (400) est pourvu d'une nervure de renfort (420) perpendiculaire à la surface de fixation (410).

4. Bloc-batterie (600) selon la revendication 1, dans lequel
la plaque latérale (200) est pourvue d'une surface concave (222) de part et d'autre de la plaque courbée, les surfaces concaves (222) faisant face l'une à l'autre ayant au moins une nervure de liaison (220) collée l'une à l'autre le long de sa direction longitudinale.

5. Bloc-batterie (600) selon la revendication 1, dans lequel
l'extrémité supérieure de la plaque latérale (200) est formée avec une bride supérieure courbée (230) qui entre en contact avec une surface supérieure du réseau de cellules (100).

6. Bloc-batterie (600) selon la revendication 5, dans lequel
la bride supérieure (230) exerce une force de fixation vers le bas pour appuyer le réseau de cellules (100) contre une plaque de base (610) du boîtier de bloc-batterie (602) alors que le support d'extrémité (400) est fixé à la pièce de montage (640).

7. Bloc-batterie (600) selon la revendication 6, dans lequel
les bords de la bride supérieure (230) en contact avec la surface supérieure du réseau de cellules (100) sont espacés des bornes d'électrodes (112) des cellules prismatiques (110) d'une distance allant d'environ 5 à environ 10 mm.

8. Bloc-batterie (600) selon la revendication 6, dans lequel
le boîtier de bloc-batterie (602) comprend :
une plaque de base (610) formant une surface inférieure, un cadre latéral (620) formant des parois le long de tous les côtés de la plaque de base (610) et un couvercle supérieur (630) scellant une surface supérieure du boîtier de bloc-batterie (602), dans lequel
l'intérieur de la plaque de base (610) est pourvu d'un trajet d'écoulement de refroidissement (614) à travers lequel un milieu de refroidissement est agencé pour s'écouler.

9. Bloc-batterie (600) selon la revendication 8, dans lequel
entre la plaque de base (610) et une surface de contact du bloc-batterie, un matériau d'interface thermique (TIM) (618) thermoconducteur est interposé.

10. Bloc-batterie (600) selon la revendication 1, dans lequel
le support latéral (210) est pourvu d'une rainure de fixation (212) insérée dans un boulon soudé (310) faisant saillie de la plaque d'extrémité (300), dans lequel
le boulon soudé (310) et la rainure de fixation (212) sont liés l'une à l'autre par soudage.

11. Bloc-batterie (600) selon la revendication 10, dans lequel
les supports latéraux (210) sont pourvus des rainures de fixation (212), respectivement, des deux côtés gauche et droit par rapport à un centre dans la direction de largeur de la plaque latérale (200).

12. Bloc-batterie (600) selon la revendication 11, dans lequel
un autre réseau de cellules agencées le long de la direction de largeur partagent la plaque latérale (200), et
la pluralité de réseaux de cellules (100) s'étendent le long d'une direction de largeur à l'aide de boulons soudés (310) prévus dans une paire de plaques d'extrémité (300) disposées sur une surface avant et arrière de l'autre réseau de cellules (110), respectivement, étant fixées aux rainures de fixation (212) du support latéral (210).
